# EUROPÄISCHE PATENTANMELDUNG

(11) **EP 1 288 043 A2**
(43) Veröffentlichungstag der Anmeldung: **05.03.2003**
(21) Anmeldenummer: 02016977.7
(22) Anmeldetag: 02.08.2002
(51) Int. Cl.: B60J 7/043

(54) **Schiebedachsystem**

(30) Priorität: 27.08.2001 DE 10141845
(71) Anmelder: ArvinMeritor GmbH, 63128 Dietzenbach (DE)
(72) Erfinder: Eiermann, Michael, Dipl.-Ing., 64319 Pfungstadt (DE); Hoffmann, Klaus-Peter, Dipl.-Ing., 45481 Mühlheim / Ruhr (DE)
(74) Vertreter: Sties, Jochen, Dipl.-Ing.

(57) **Zusammenfassung**

Ein Schiebedachsystem (7) für ein Fahrzeug, mit mindestens einem Deckelteil (10), einem Deckelhalter (14), an dem das Deckelteil (10) angebracht ist, einer Führungsschiene (22), an der eine Ausstellkulisse (28) vorgesehen ist, und einem Schlitten (32), der in der Führungsschiene (22) verschiebbar ist, wobei am Schlitten (32) eine Verstellkulisse (38) vorgesehen ist, in die ein Ausstellzapfen (16) eingreift, der am Deckelhalter (14) angebracht ist, und wobei der Ausstellzapfen (16) auch in die Ausstellkulisse (28) eingreift, ist dadurch gekennzeichnet, daß an der Führungsschiene (22) eine Führungskulisse (30) vorgesehen ist und daß an dem Deckelhalter (14) ein Führungszapfen (18) vorgesehen ist, der in der Führungskulisse (30) gleitet.

## Beschreibung

Die Erfindung betrifft ein Schiebedachsystem für ein Fahrzeug, mit mindestens einem Deckelteil, einem Deckelhalter, an dem das Deckelteil angebracht ist, einer Führungsschiene, an der eine Ausstellkulisse vorgesehen ist, und einem Schlitten, der in der Führungsschiene verschiebbar ist, wobei am Schlitten eine Verstellkulisse vorgesehen ist, in die ein Ausstellzapfen eingreift, der am Deckelhalter angebracht ist, und wobei der Ausstellzapfen auch in die Ausstellkulisse eingreift.

Ein solches Schiebedachsystem ist aus der europäischen Patentanmeldung EP 0 693 996 bekannt. Bei diesem bekannten System ist der am Deckelhalter angebrachte Ausstellzapfen dem in Fahrtrichtung gesehen vorne liegenden Rand des Deckelteils zugeordnet. An einem zweiten Deckelhalter, der etwa mittig am Deckelteil angebracht ist, ist eine zweite Kulisse vorgesehen, in die ein am Schlitten angebrachter Zapfen eingreift. Die Stellung des Deckelteils ergibt sich zum einen aus der Position des Ausstellzapfens relativ zum Schlitten, wobei diese Position bestimmt ist durch den Schnittpunkt zwischen der Verstellkulisse am Schlitten und der Ausstellkulisse in der Führungsschiene, und zum anderen von der Position des Zapfens am Schlitten in der Kulisse des zweiten Deckelhalters.

Nachteilig bei diesem System ist zum einen, daß der Schlitten eine vergleichsweise große Länge hat. Aus Stabilitätsgründen muß zwischen dem Ausstellzapfen am ersten Deckelhalter und dem Zapfen am Schlitten, der in den zweiten Deckelhalter eingreift, ein gewisser Mindestabstand vorliegen. Da sowohl der Ausstellzapfen am ersten Deckelhalter als auch die Kulisse im zweiten Deckelhalter mit dem Schlitten zusammenwirken, muß dieser folglich eine entsprechend große Länge haben. Nachteilig ist zum anderen, daß die Verwendung von zwei Kulissenführungen, mittels denen die beiden Deckelteile mit dem Schlitten verbunden sind, es zusammen mit der in der Führungsschiene ausgebildeten Ausstellkulisse erfordert, besonders enge Toleranzen einzuhalten, wenn einerseits ein Verklemmen des gesamten Mechanismus und zum anderen eine Geräuschentwicklung durch Klappern verhindert werden soll.

Die Aufgabe der Erfindung besteht darin, das bekannte Schiebedachsystem dahingehend weiterzubilden, daß bei geringeren Anforderungen an die einzuhaltenden Toleranzen eine kürzere Baulänge erreicht werden kann.

Zu diesem Zweck ist erfindungsgemäß bei einem Schiebedachsystem der eingangs genannten Art an der Führungsschiene eine Führungskulisse vorgesehen und an dem Deckelhalter ein Führungszapfen, der in der Führungskulisse gleitet. Bei dieser Gestaltung wird eine einzige Kulissenführung zwischen dem Deckelteil und dem Schlitten verwendet, nämlich die aus der Verstellkulisse und dem Ausstellzapfen gebildete Kulissenführung. Diese Verbindung zwischen Schlitten und Deckelhalter liegt vorzugsweise im Bereich der Hinterkante des Deckelteils. Die zweite Verbindung zwischen dem Deckelhalter und der Führungsschiene ist gewährleistet durch die Führungskulisse in der Führungsschiene, in die der Führungszapfen am Deckelhalter eingreift. Zur Erzielung einer größtmöglichen Stabilität kann der Führungszapfen am Deckelhalter außerhalb des Deckelteils vor dessen Vorderkante angeordnet sein. Dies ist problemlos möglich, ohne den Schlitten entsprechend lang ausführen zu müssen, da bei der erfindungsgemäßen Gestaltung der zweite Verbindungspunkt zwischen Deckelhalter und Führungsschiene nicht mit dem Schlitten zusammenwirkt. Die Anforderungen an die einzuhaltenden Toleranzen sind vergleichsweise gering. Am Deckelhalter selbst ist überhaupt keine Kulisse vorgesehen. Die beiden an dem Deckelhalter vorgesehenen Zapfen, nämlich der Ausstellzapfen und der Führungszapfen, können ohne größere Probleme präzise relativ zueinander positioniert werden. Die beiden in der Führungsschiene vorgesehenen Kulissen, nämlich die Ausstellkulisse und die Führungskulisse, können ebenso problemlos präzise relativ zueinander positioniert werden, da sie an ein und demselben Bauteil vorgesehen sind.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigt:
- Figur 1 in einer schematischen Ansicht ein Fahrzeugdach mit einem Schiebedachsystem;
- Figur 2 eine schematische, perspektivische Ansicht entlang der Ebene II-II von Figur 1;

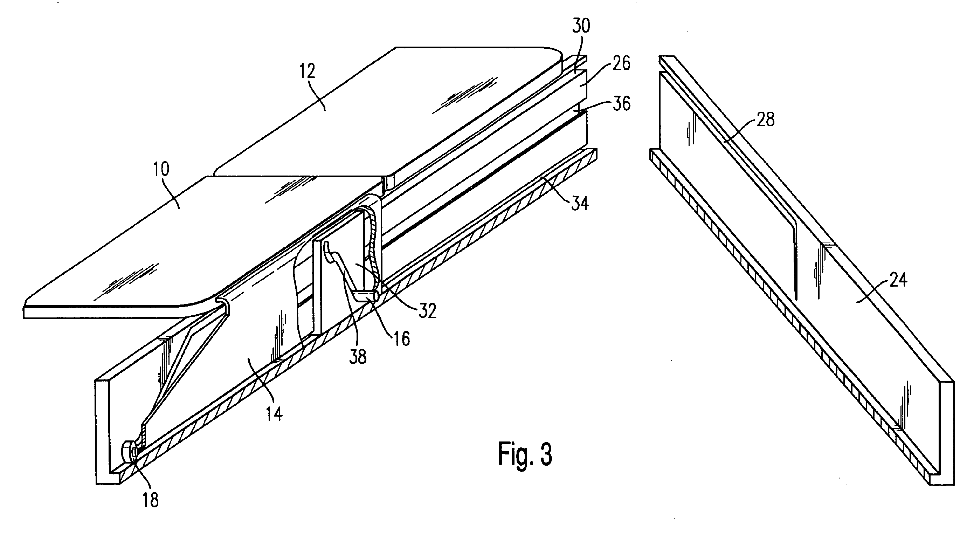

- Figur 3 eine perspektivische Ansicht mit Ausbrüchen des Schiebedachsystems von Figur 2, wobei die Führungsschiene entlang der Ebene b-b von Figur 2 aufgeschnitten ist;

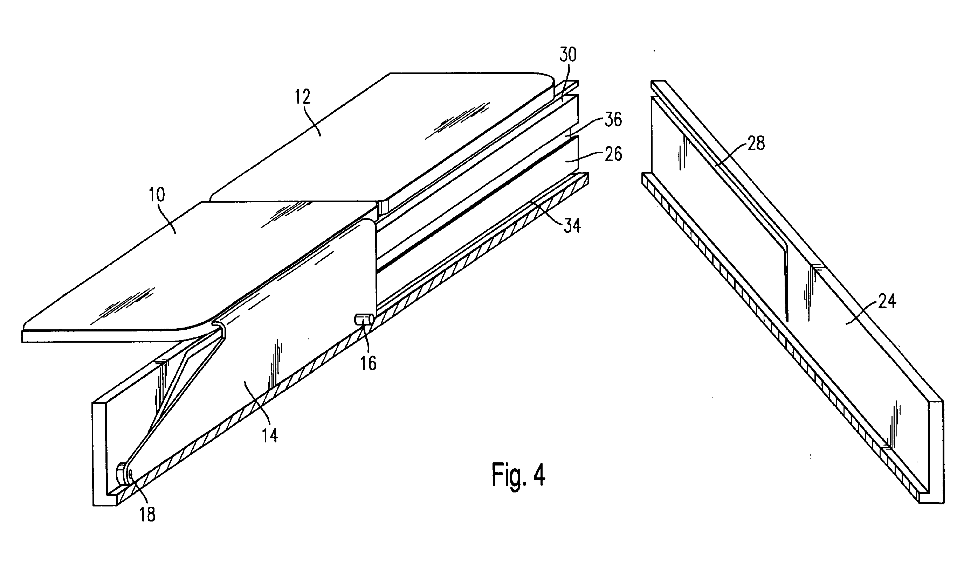

- Figur 4 in einer Ansicht entsprechend derjenigen von Figur 3 das Schiebedachsystems, wobei der Deckelhalter geschlossen gezeigt ist;
- die Figuren 5a und 5b das Schiebedachsystem von Figur 2 in einem Schnitt entlang der Ebene a-a bzw. b-b von Figur 2 in einer geschlossenen Stellung;
- die Figuren 6a und 6b das Schiebedachsystem der Figuren 5a und 5b in einer Lüfterstellung;
- die Figuren 7a und 7b das Schiebedachsystem der Figuren 5a und 5b in einer teilgeöffneten Stellung; und
- die Figuren 8a und 8b das Schiebedachsystem der Figuren 5a und 5b in einer vollständig geöffneten Stellung.

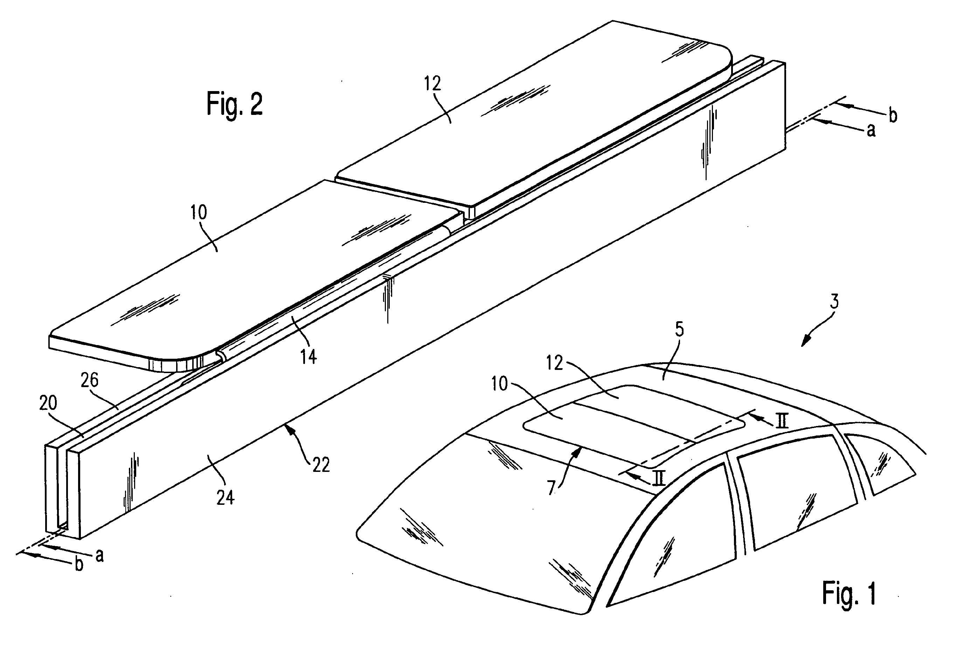

In Figur 1 ist schematisch ein Fahrzeug 3 mit einem Fahrzeugdach 5 gezeigt. Am Fahrzeugdach 5 ist ein Schiebedachsystem 7 angebracht, das zwei verstellbare Deckelteile 10, 12 aufweist. Alternativ könnte das zweite Deckelteil auch feststehend sein. Nachfolgend wird der Mechanismus zur Verstellung der Deckelteile anhand des in Fahrtrichtung vorne liegenden ersten Deckelteils 10 erläutert. Dabei wird nur eine Seite des Mechanismus beschrieben, nämlich die in Fahrrichtung des Fahrzeugs gesehen linke Seite. Da der Mechanismus spiegelsymmetrisch ist, ergibt sich der Aufbau der gegenüberliegenden Seite von selbst.

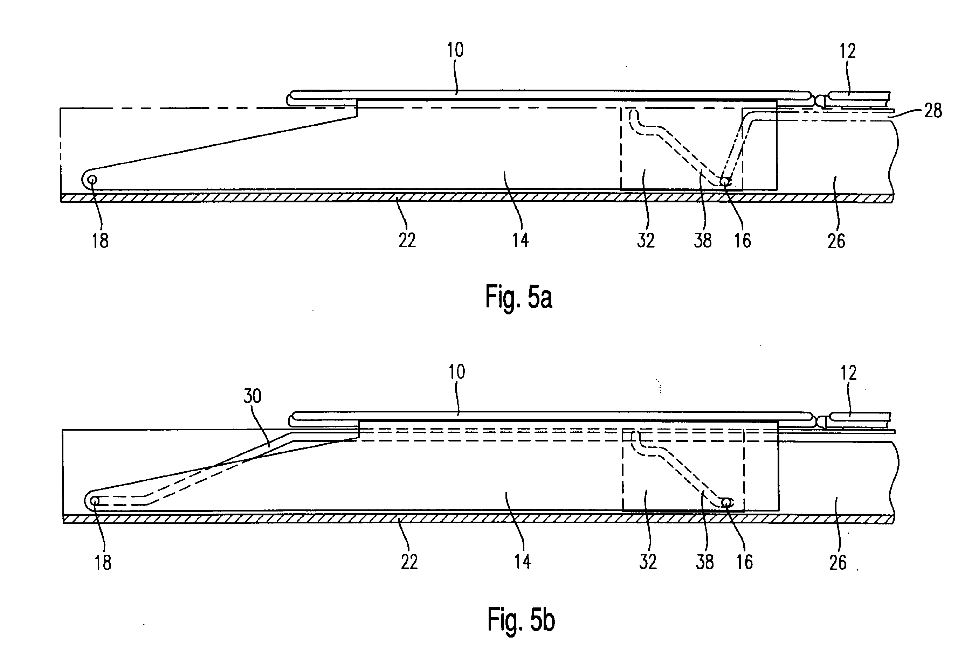

Das Deckelteil 10 ist an einem Deckelhalter 14 befestigt, der hier nach Art einer Platte ausgebildet ist, die sich im rechten Winkel zum Deckelteil 10 erstreckt. Am Deckelhalter 14 sind ein Ausstellzapfen 16 und ein Führungszapfen 18 vorgesehen. Der Ausstellzapfen 16 ist im Bereich des in Fahrtrichtung gesehen hinteren Endes des Deckelteils 10 angeordnet. Der Führungszapfen 18 ist in großem Abstand vom Ausstellzapfen 16 angeordnet, und zwar so weit vorne, daß er vor dem in Fahrtrichtung gesehen vorderen Rand des Deckelteils 10 liegt (siehe beispielsweise Figur 5a).

Der Deckelhalter 16 greift in einen Führungsschlitz 20 einer U-förmigen Führungsschiene 22 ein, wobei der Führungsschlitz 20 durch zwei einander gegenüberliegende Seitenteile 24, 26 gebildet ist. Im Seitenteil 24 ist eine Ausstellkulisse 28 gebildet, in die der Ausstellzapfen 16 eingreift. Die Ausstellkulisse 28 weist, relativ zur Fahrtrichtung von vorne nach hinten betrachtet, zuerst einen steil vom Boden des Führungsschlitzes 20 weg ansteigenden Abschnitt und daran anschließend einen gerade, parallel zur Erstreckungsrichtung der Führungsschiene 22 verlaufenden Abschnitt auf.

Im Seitenteil 26 der Führungsschiene 22 ist eine Führungskulisse 30 gebildet, in die der Führungszapfen 18 des Deckelteils 14 eingreift. Die Führungskulisse 30 weist, wiederum betrachtet relativ zur Fahrtrichtung des Fahrzeugs von vorne nach hinten, zunächst einen sich in der Nähe des Bodens des Führungsschlitzes 20 geradlinig und parallel zur Längsrichtung der Führungsschiene 22 erstreckenden Abschnitt auf, dann einen sich geradlinig schräg nach oben hin erstreckenden Abschnitt und daran anschließend wiederum einen sich geradlinig und parallel zur Längsrichtung der Führungsschiene erstreckenden Abschnitt.

Im Führungsschlitz 20 der Führungsschiene 22 ist ein Schlitten 32 verschiebbar gelagert. Zur Führung des Schlittens ist eine Nut 34 im Seitenteil 26 der Führungsschiene 22 vorgesehen. Weiterhin ist ein Kanal 36 vorgesehen, in welchem ein (nicht dargestelltes) Antriebskabel für den Schlitten 32 angeordnet ist. Im Schlitten ist eine Verstellkulisse 38 vorgesehen, in die der Ausstellzapfen 16 am Deckelhalter 14 eingreift. Die Verstellkulisse 38 hat, betrachtet relativ zur Fahrtrichtung des Fahrzeugs von vorne nach hinten, folgenden Verlauf: In einem ersten Abschnitt verläuft die Verstellkulisse 38 senkrecht von oben nach unten; daran anschließend folgt eine Biegung um 90° nach hinten, an die sich ein waagrecht, parallel zur Verstellrichtung des Schlittens in der Schiene verlaufender Abschnitt anschließt. Auf diesen folgt ein sich unter einem Winkel von etwa 45° schräg nach unten erstreckender, geradliniger Abschnitt, der in einen kurzen, sich wiederum waagrecht nach hinten erstreckenden Abschnitt übergeht.

Nachfolgend wird die Funktionsweise des beschriebenen Schiebedachsystems anhand der Figuren 5a bis 8b beschrieben. In Figur 5a und 5b ist das Schiebedachsystem mit geschlossenem ersten Deckelteil 10 gezeigt. Der Führungszapfen 18 befindet sich am linken Ende der Führungskulisse 30, und der Ausstellzapfen 16 befindet sich am unteren, linken Ende der Ausstellkulisse 28. Der Schlitten 32 ist so angeordnet, daß sich der Ausstellzapfen 16 am rechten, unteren Ende der Verstellkulisse 38 befindet. In dieser Stellung des Schlittens ist das Deckelteil 10 sicher arretiert; eine Verstellung in der Längsrichtung der Führungsschiene, also in der x-Richtung, ist nicht möglich, da der Ausstellzapfen 16 von der Verstellkulisse 38 so gehalten ist, daß er sich in der x-Richtung nicht in der Ausstellkulisse 28 verschieben kann. Eine Bewegung des Deckelteils nach oben, also in der z-Richtung, ist ebenfalls nicht möglich, da der Ausstellzapfen 16 vom waagrecht verlaufenden Abschnitt der Verstellkulisse 38 und der Führungszapfen 18 vom waagrecht verlaufenden Abschnitt der Führungskulisse 30 fest in z-Richtung gehalten wird.

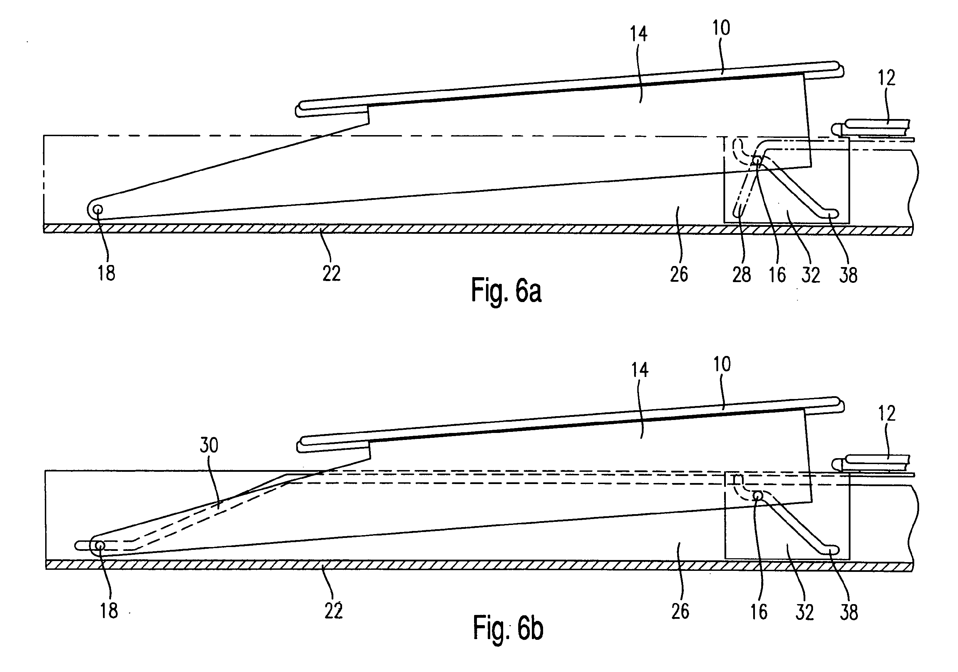

Durch Verstellen des Schlittens 32 bezüglich den Figuren nach rechts gelangt das erste Deckelteil 10 in die in den Figuren 6a und 6b dargestellte, sogenannte Lüfterstellung. In dieser Stellung ist der hintere Rand des Deckelteils angehoben. Beim Verschieben des Schlittens 32 nach rechts wird der Ausstellzapfen 16, geführt vom schräg nach oben verlaufenden Abschnitt der Verstellkulisse 38, in der Ausstellkulisse 28 schräg nach oben und hinten verstellt. Die Position des Ausstellzapfens 16 ist dabei jederzeit eindeutig festgelegt, und zwar auf den Schnittpunkt zwischen der Verstellkulisse 38 im Schlitten 32 und der Ausstellkulisse 28 im Seitenteil 26 der Führungsschiene 22. Die Lüfterstellung des Deckelteils 10 ist erreicht, wenn sich der Ausstellzapfen 16 im waagrecht verlaufenden Zwischenabschnitt der Verstellkulisse 38 befindet. Wie in Figur 6b zu sehen ist, wandert der Führungszapfen 18 beim Verstellen des Deckelteils 10 in der Führungskulisse 30 geringfügig nach rechts.

Grundsätzlich wäre es auch möglich, daß sich der Ausstellzapfen 16 in der Lüfterstellung des Deckelteils 10 an einem schräg verlaufenden Abschnitt der Verstellkulisse 38 befindet. Die vorliegende Gestaltung, bei der die Lüfterstellung durch Erreichen eines waagrecht verlaufenden Abschnittes der Verstellkulisse 38 bestimmt ist, bietet jedoch den Vorteil, daß die Höhe des Deckelteils 10 in der Lüfterstellung sehr präzise definiert ist, ohne daß die Position des Schlittens 32 in der x-Richtung sehr präzise eingehalten werden muß; der mögliche Toleranzbereich entspricht der Länge des waagrecht verlaufenden Zwischenabschnittes der Verstellkulisse 38. Außerdem ist das Schiebedachsystem bei der vorliegenden Gestaltung selbsthemmend, wenn die Lüfterstellung erreicht ist; Belastungen in z-Richtung, die auf das Deckelteil einwirken, erzeugen keine in x-Richtung wirkenden Kräfte auf den Schlitten 32.

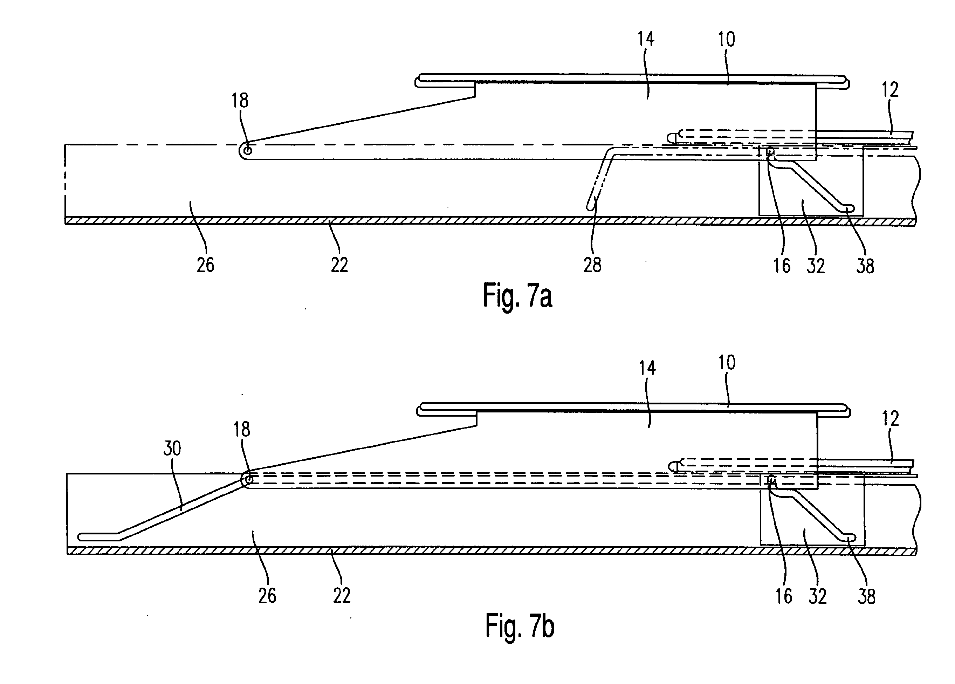

Wenn der Schlitten 32 ausgehend von der in den Figuren 6a und 6b gezeigten Stellung weiter nach rechts bewegt wird, wird die in den Figuren 7a und 7b gezeigte Zwischenstellung erreicht. In dieser Zwischenstellung hat das erste Deckelteil 10 gerade seine maximal ausgestellte Position erreicht, da der Führungszapfen 18 sich am Übergang vom schräg verlaufenden Abschnitt der Führungskulisse 30 zum oben liegenden, waagrecht verlaufenden Abschnitt befindet. Der Ausstellzapfen 16 befindet sich bereits im oberen, waagrecht verlaufenden Abschnitt der Ausstellkulisse 28 sowie am oberen Ende der Verstellkulisse 38.

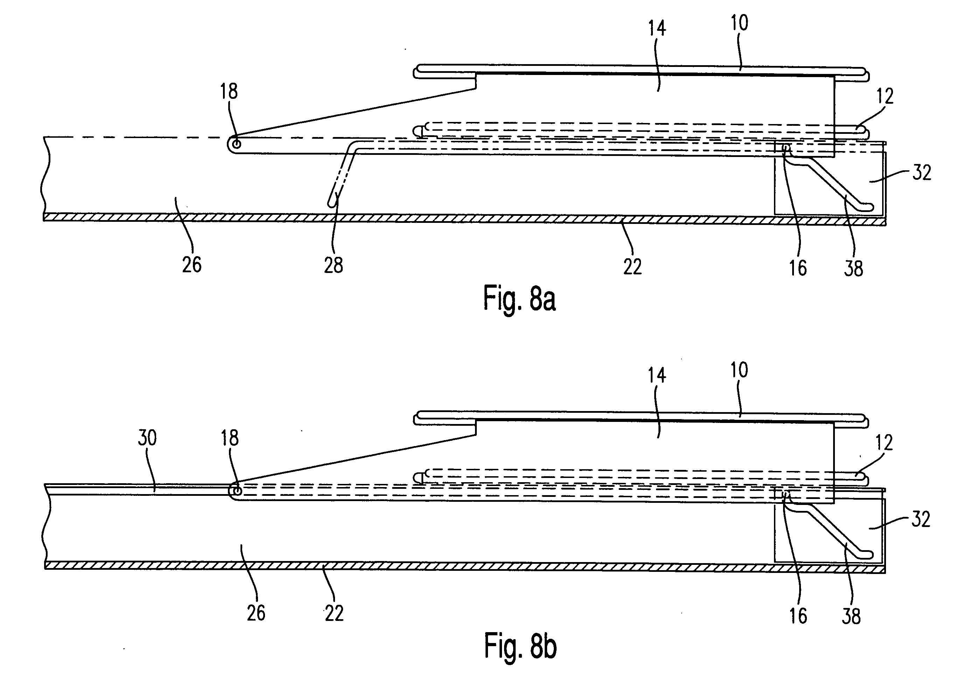

Wenn ausgehend von der in den Figuren 7a und 7b gezeigten Stellung der Schlitten 32 weiter nach rechts verstellt wird, gelangt das erste Deckelteil 10 in seine in den Figuren 8a und 8b gezeigte, vollständig geöffnete Stellung, in der es oberhalb des zweiten Deckelteils 12 liegt. Diese Stellung kann beispielsweise dadurch bestimmt sein, daß der Schlitten 32 an einem Anschlag am hinteren Ende der Führungsschiene anliegt.

Um das Deckelteil 10 wieder in die geschossene Stellung zurückzuführen, wird der Schlitten bezüglich den Figuren nach links verstellt, also in Fahrtrichtung gesehen nach vorne. Dabei wird das Deckelteil 10 vom Ausstellzapfen 16 und dem Führungszapfen 18 in seine geschlossene Stellung geführt.

Wie beispielsweise in Figur 6a zu sehen ist, sind der Ausstellzapfen 16 und der Führungszapfen 18 in einem sehr großen Abstand voneinander angeordnet. Dies verleiht dem am Deckelhalter 14 angebrachten Deckelteil 10 eine besonders große Stabilität. Gleichzeitig ist der Schlitten 32 besonders kurz ausgeführt, so daß sich eine kompakte Bauweise ergibt.

### Bezugszeichenliste

- 3:: Fahrzeug
- 5:: Fahrzeugdach
- 7:: Schiebedachsystem
- 10:: erstes Deckelteil
- 12:: zweites Deckelteil
- 14:: Deckelhalter
- 16:: Ausstellzapfen
- 18:: Führungszapfen
- 20:: Führungsschlitz
- 22:: Führungsschiene
- 24:: Seitenteil
- 26:: Seitenteil
- 28:: Ausstellkulisse
- 30:: Führungskulisse
- 32:: Schlitten
- 34:: Nut
- 36:: Kanal
- 38:: Verstellkulisse

## Patentansprüche

1. Schiebedachsystem (7) für ein Fahrzeug, mit mindestens einem Deckelteil (10), einem Deckelhalter (14), an dem das Deckelteil (10) angebracht ist, einer Führungsschiene (22), an der eine Ausstellkulisse (28) vorgesehen ist, und einem Schlitten (32), der in der Führungsschiene (22) verschiebbar ist, wobei am Schlitten (32) eine Verstellkulisse (38) vorgesehen ist, in die ein Ausstellzapfen (16) eingreift, der am Deckelhalter (14) angebracht ist, und wobei der Ausstellzapfen (16) auch in die Ausstellkulisse (28) eingreift, **dadurch gekennzeichnet, daß** an der Führungsschiene (22) eine Führungskulisse (30) vorgesehen ist und daß an dem Deckelhalter (14) ein Führungszapfen (18) vorgesehen ist, der in der Führungskulisse (30) gleitet.

2. Schiebedachsystem nach Anspruch 1, **dadurch gekennzeichnet, daß** der Ausstellzapfen (16) an der Seite des Deckelhalters (14) angeordnet ist, die in Fahrtrichtung des Fahrzeugs gesehen hinten liegt, und daß der Führungszapfen (18) vorne angeordnet ist.

3. Schiebedachsystem nach Anspruch 1 oder Anspruch 2, **dadurch gekennzeichnet, daß** der Abstand zwischen Führungszapfen (18) und Ausstellzapfen (16) größer ist als die Länge des Deckelteils (10).

4. Schiebedachsystem nach einem der vorhergehenden Ansprüche, **dadurch gekennzeichnet, daß** der Führungszapfen (18) vor dem vorderen Rand des Deckelteils (10) liegt.

5. Schiebedachsystem nach einem der vorhergehenden Ansprüche, **dadurch gekennzeichnet, daß** die Verstellkulisse (38) einen kurzen Mittelabschnitt aufweist, der parallel zur Verschieberichtung des Schlittens (32) in der Führungsschiene (22) verläuft.
